Europäisches Patentamt

(19) European Patent Office

Office européen des brevets

(11) Numéro de publication : **0 022 734**
**B1**

(12) # FASCICULE DE BREVET EUROPÉEN

(45) Date de publication du fascicule du brevet :
07.11.84

(51) Int. Cl.³ : **B 23 K 35/30, C 22 C 19/05//**
**B23K9/04**

(21) Numéro de dépôt : **80420082.2**

(22) Date de dépôt : **02.07.80**

(54) **Alliages pour rechargement dur résistants à haute température.**

(30) Priorité : 05.07.79 FR 7917934

(43) Date de publication de la demande :
21.01.81 Bulletin 81/03

(45) Mention de la délivrance du brevet :
07.11.84 Bulletin 84/45

(84) Etats contractants désignés :
DE GB NL

(56) Documents cités :
FR-A- 1 421 296
FR-A- 2 328 544
GB-A-   778 359
US-A- 2 469 718
Handbuch der Sonderstahlkunde Eduard Hendremont pp. 1038-1040
"The Role of cobalt in Industrial Hardfacing" M.
RIDDIHOUGH.
Journées Internationales des Applications du cobalt
Bruxelles juin 1964

(73) Titulaire : **Alliages Frittés METAFRAM**
**56 rue de Londres**
**F-75008 Paris (FR)**

(72) Inventeur : **Andries, Bernard**
**14, rue Barbi**
**F-38600 Fontaine (FR)**

(74) Mandataire : **Séraphin, Léon et al**
**PECHINEY 28, rue de Bonnel**
**F-69433 Lyon Cedex 3 (FR)**

**0 022 734**

**Description**

La présente invention se rapporte à des alliages de rechargement durs, utilisables à chaud. Ils sont caractérisés par leur teneur en cobalt relativement faible, inférieure à 30 % (en poids) environ.

On sait que les alliages pour rechargement durs et résistants à chaud sont généralement des alliages carburés contenant essentiellement du Co, du Cr et du tungstène, avec présence éventuelle, dans certains cas, de Ni ou de Fe ou Mo.

Ainsi, le document « Handbuch der Sonderstalhlkunde » de E. Houdremont (3° édition-1956) décrit des alliages durs pour rechargement contenant :

C 2 à 4 % ; Co 35 à 55 % ; Cr 25 à 33 % ; W 10 à 25 % ; Fe 0 à 10 %, le cobalt pouvant être remplacé partiellement par du nickel (p. 1038).

Ces alliages trouvent leurs applications principales dans les emplois où se trouvent réunies des conditions d'usure et de résistance à la corrosion, à température élevée. Ils sont généralement utilisés sous forme de revêtements superficiels déposés par soudo-brasure, soit avant mise en service, soit à titre de réparation, en particulier pour les portées de soupapes de moteurs à explosion ou de vannes pour eau pressurisée ou vapeur sous pression.

L'augmentation relative du prix du Co et ses difficultés d'approvisionnement nous ont conduit à rechercher des alliages équivalents, mais moins chers et de plus grande disponibilité.

Le document « The role of cobalt in Industrial Hardfacing » de M. Riddihough donne dans son tableau 2 des exemples d'alliages de rechargement dur à base de nickel, et en particulier un alliage « g » de composition » :

Fe 4,28 % ; Co 11,26 % ; Cr 28,63 % ; C 2,47 % ; W 14,15 % ; Si 0,65 % ; Ni solde, soit Ni = environ 38,5 %.

Les alliages étudiés dans cette demande répondent à l'objectif défini précédemment — coût moindre et plus grande disponibilité — tout en conservant des caractéristiques mécaniques à chaud voisines des alliages courants, ainsi que la bonne aptitude au dépôt par fusion de ces derniers, c'est-à-dire l'absence d'étincelage ou de rochage.

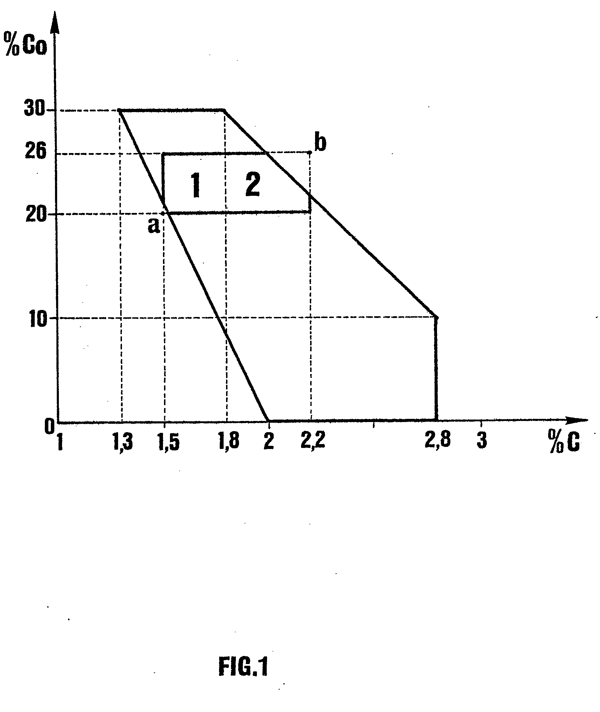

Pour obtenir les propriétés optimales de dureté à utilisation, les teneurs en C et Co des alliages suivant l'invention doivent être comprises dans le domaine polygonal convexe délimité, à la figure 1, par les points suivants (% en poids) :

| C | Co |
|---|---|
| 1,3 | 30 |
| 1,8 | 30 |
| 2,0 | 0 |
| 2,8 | 0 |
| 2,8 | 10 |

Les alliages les plus carburés dont la structure à l'équilibre comporte des carbures hypereutectiques présentent des risques de fissuration importants lors du dépôt au chalumeau ; ces alliages sont donc généralement déposés à l'aide de sources énergétiques denses telles que le soudage à l'arc TIG ou le plasma ; les dépôts ainsi obtenus sont alors sains, de structure fine et exempts de carbures de chrome primaires.

L'alliage « g » connu par le deuxième document cité est compris dans le domaine polygonal liant les teneurs en C et Co.

Les compositions déterminées à l'intérieur du domaine polygonal pour obtenir des propriétés à chaud comparables à celles d'un alliage courant de l'art antérieur se distinguent de cet alliage « g » par les teneurs en (C, Co, Fe) et sont comprises dans les limites suivantes :

| | | C | Si | Cr | W | Co | Fe | Ni | autres (total) |
|---|---|---|---|---|---|---|---|---|---|
| | (1) | 1,5 à 1,8 | 0,5 à 1,5 | 25 à 30 | 10 à 15 | 20 à 26 | ≤ 3 | solde | ≤ 1,0 |
| | (2) | 1,8 à 2,2 | 0,5 à 1,5 | 25 à 30 | 10 à 15 | 20 à 26 | ≤ 3 | solde | ≤ 1,0 |

Les variations simultanées de C et de Co étant toutefois restreintes, pour ces deux compositions préférentielles, à l'intérieur du domaine polygonal (C, Co), comme représenté sur la figure 1. Comme on peut le voir sur cette figure 1, les points (a) (C 1,5-Co 20) et (b) (C 2,2-Co 26) sont respectivement en dehors des domaines de composition préférentielle (1) et (2).

2

# 0 022 734

Alors que la première composition est particulièrement bien adaptée au dépôt au chalumeau, la deuxième est recommandée pour le dépôt type TIG ou plasma.

Les exemples donnés ci-après permettront d'illustrer les propriétés des alliages suivant l'invention comparativement à ceux de l'art antérieur. Les propriétés des deux alliages suivant l'invention (1,2) ont été comparées à celles d'un alliage courant de l'art antérieur (A).

Les compositions sont les suivantes (% en poids) :

|   | C | Si | W | Cr | Co | Ni | Fe |
|---|---|----|---|----|----|----|----|
| A | 1,6 | 1 | 12 | 25,5 | 36 | 22 | 1 |
| 1 | 1,6 | 1 | 12 | 27 | 25 | solde | 1 |
| 2 | 2,0 | 1 | 12 | 27 | 25 | solde | 1 |

— Dureté à chaud :

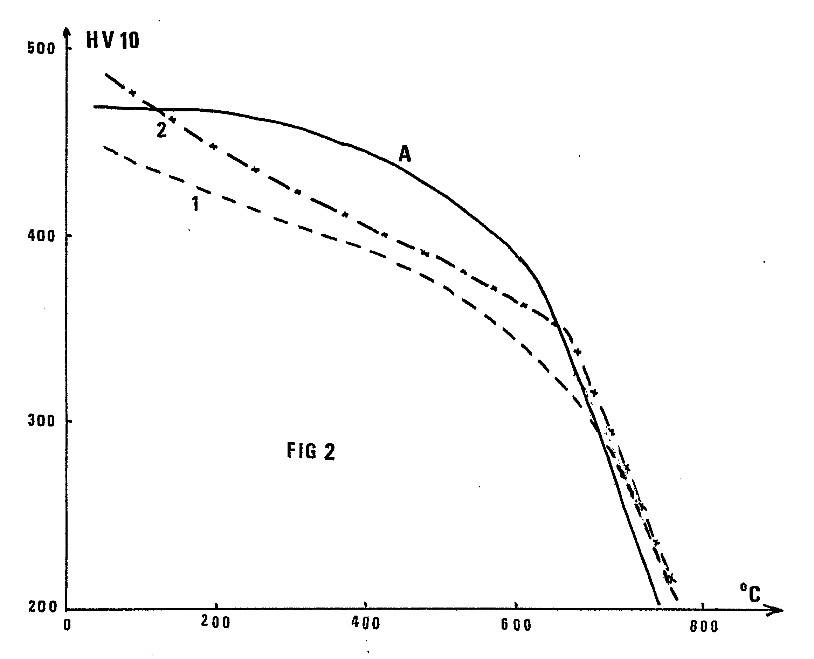

Les duretés Vickers sous 10 kgf (soit 9,81 daN) déterminées sur cylindres moulés ⌀ 20 × 15 mm au cours d'un cycle de chauffage et de refroidissement atteignant 800 °C, sont reportées à la figure 2.

On peut constater qu'au-delà de 650 °C environ, les duretés à chaud des alliages suivant l'invention sont très voisines de celles de l'alliage classique.

— Stabilité thermique :

Les duretés Vickers sous 30 kgf (soit 29,4 daN) ont été déterminées avant et après maintien d'échantillons moulés 25 × 25 × 10 mm à 800 °C pendant 8 h. Dans tous les cas les variations de dureté sont inférieures à ± 20 unités.

## Revendications

1. Alliage dur pour rechargement, dont les teneurs en C et en Co sont comprises à l'intérieur d'un domaine polygonal convexe déterminé par les points suivants de coordonnées (% en poids) :

| C | Co |
|---|----|
| 1,3 | 30 |
| 1,8 | 30 |
| 2,0 | 0 |
| 2,8 | 0 |
| 2,8 | 10 |

caractérisé en ce que d'une part sa teneur en carbone est comprise entre 1,5 et 1,8 % et sa teneur en cobalt est comprise entre 20 et 26 %, les variations simultanées de C et de Co étant toutefois restreintes à l'intérieur dudit domaine polygonal convexe, et en ce que d'autre part sa composition en éléments autres que C et Co est :

Si 0,5 à 1,5 ; Cr 25 à 30 ; W 10 à 15 ; Fe ⩽ 3 ; autre total ⩽ 1,0 ; Ni solde.

2. Alliage dur pour rechargement, dont les teneurs en C et en Co sont comprises à l'intérieur d'un domaine polygonal convexe déterminé par les points suivants de coordonnées (% en poids) :

| C | Co |
|---|----|
| 1,3 | 30 |
| 1,8 | 30 |
| 2,0 | 0 |
| 2,8 | 0 |
| 2,8 | 10 |

caractérisé en ce que d'une part sa teneur en carbone est comprise entre 1,8 et 2,2 % et sa teneur en cobalt est comprise entre 20 et 26 %, les variations simultanées de C et de Co étant toutefois restreintes à l'intérieur dudit domaine polygonal convexe, et en ce que d'autre part sa composition en éléments autres que C et Co est :

Si 0,5 à 1,5 ; Cr 25 à 30 ; W 10 à 15 ; Fe ⩽ 3 ; autre total ⩽ 1,0 ; Ni solde.

## Claims

1. A hard, recharging alloy, the C and Co contents of which are within a convex, polygonal area delimited by the following coordinates (%, by weight) :

3

# 0 022 734

| C | Co |
|---|---|
| 1.3 | 30 |
| 1.8 | 30 |
| 2.0 | 0 |
| 2.8 | 0 |
| 2.8 | 10 |

characterised in that on the one hand the carbon content thereof is from 1.5 to 1.8 % and the cobalt content thereof is from 20 to 26 %, the simultaneous variations of C and Co nevertheless being restricted to within the above-mentioned convex, polygonal area, and on the other hand the composition thereof of elements other than C and Co is :

Si from 0.5 to 15 ; Cr from 25 to 30 ; W from 10 to 15 ; Fe ≤ 3 ; Total others ≤ 1.0 ; Ni Remainder.

2. A hard, recharging alloy, the C and Co, contents of which are within a convex, polygonal area, delimited by the following coordinates (%, by weight) :

| C | Co |
|---|---|
| 1.3 | 30 |
| 1.8 | 30 |
| 2.0 | 0 |
| 2.8 | 0 |
| 2.8 | 10 |

characterised in that on the one hand the carbon content thereof is from 1.8 to 2.2 % and the cobalt content thereof is from 20 to 26 %, the simultaneous variations of C and Co nevertheless being restricted to within the above-mentioned convex, polygonal area, and on the other hand the composition thereof of elements other than C and Co is :

Si from 0.5 to 1.5 ; Cr from 25 to 30 ; W from 10 to 15 ; Fe ≤ 3 ; Total others ≤ 1.0 ; Ni remainder.

**Ansprüche**

1. Harte Auftragslegierung, deren C- und Co-Gehalte im Inneren eines konvexen Vieleckbereichs liegen, der durch die folgenden Koordinatenpunkte (Gewichtsprozent) bestimmt ist :

| C | Co |
|---|---|
| 1,3 | 30 |
| 1,8 | 30 |
| 2,0 | 0 |
| 2,8 | 0 |
| 2,8 | 10 |

dadurch gekennzeichnet, daß einerseits ihr Kohlenstoffgehalt zwischen 1,5 und 1,8 % und ihr Kobaltgehalt zwischen 20 und 26 % liegen, wobei die gleichzeitigen Änderungen von C und Co jedoch auf das Innere des konvexen Vieleckbereiches beschränkt sind, und daß andererseits ihre Zusammensetzung an anderen Elementen als C und Co ist :

0,5 bis 1,5 Si ; 25 bis 30 Cr ; 10 bis 15 W ; ≤ 3 Fe ; andere (insgesamt) ≤ 1,0 ; Rest Ni.

2. Harte Auftragslegierung, deren C- und Co-Gehalte im Inneren eines konvexen Vieleckbereichs liegen, der durch die folgenden Koordinatenpunkte (Gewichtsprozent) bestimmt ist :

| C | Co |
|---|---|
| 1,3 | 30 |
| 1,8 | 30 |
| 2,0 | 0 |
| 2,8 | 0 |
| 2,8 | 10 |

dadurch gekennzeichnet, daß einerseits ihr Kohlenstoffgehalt zwischen 1,8 und 2,2 % und ihr Kobaltgehalt zwischen 20 und 26 % liegen, wobei die gleichzeitigen Änderungen von C und Co jedoch auf das Innere des konvexen Vieleckbereichs beschränkt sind, und daß andererseits ihre Zusammensetzung an anderen Elementen als C und Co ist :

0,5 bis 1,5 Si ; 25 bis 30 Cr ; 10 bis 15 W ; ≤ 3 Fe ; andere (insgesamt) ≤ 1,0 ; Rest Ni.

4

FIG.1

1

FIG 2